(19) Europäisches Patentamt
European Patent Office
Office européen des brevets

(11) **EP 2 462 086 B1**

(12) **EUROPÄISCHE PATENTSCHRIFT**

(45) Veröffentlichungstag und Bekanntmachung des Hinweises auf die Patenterteilung:
**05.09.2018 Patentblatt 2018/36**

(21) Anmeldenummer: **10743025.8**

(22) Anmeldetag: **28.07.2010**

(51) Int Cl.:
*C05G 5/00* *(2006.01)*    *C05G 3/08* *(2006.01)*
*C05C 1/00* *(2006.01)*    *C05B 7/00* *(2006.01)*
*C05C 9/00* *(2006.01)*    *C05G 3/00* *(2006.01)*
*C05C 3/00* *(2006.01)*    *C05F 7/00* *(2006.01)*

(86) Internationale Anmeldenummer:
**PCT/EP2010/004631**

(87) Internationale Veröffentlichungsnummer:
**WO 2011/015306 (10.02.2011 Gazette 2011/06)**

(54) **N/S-FLÜSSIGDÜNGER MIT HOHEM NÄHRSTOFFGEHALT**

N/S LIQUID FERTILISER HAVING A HIGH NUTRIENT CONTENT

ENGRAIS LIQUIDE N/S À HAUTE TENEUR NUTRITIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **05.08.2009 DE 102009036230**

(43) Veröffentlichungstag der Anmeldung:
**13.06.2012 Patentblatt 2012/24**

(73) Patentinhaber: **SKW STICKSTOFFWERKE PIESTERITZ GmbH**
**06886 Lutherstadt Wittenberg (DE)**

(72) Erfinder:
• **REINHARDT, Petra**
**06847 Dessau (DE)**

• **NICLAS, Hans-Joachim**
**12435 Berlin (DE)**
• **RADICS, Ute**
**06901 Kemberg (DE)**
• **FUCHS, Michael**
**04451 Cunnersdorf (DE)**

(74) Vertreter: **Grünecker Patent- und Rechtsanwälte PartG mbB**
**Leopoldstraße 4**
**80802 München (DE)**

(56) Entgegenhaltungen:
**DD-A1- 208 143    FR-A1- 2 626 874**
**US-A- 3 930 832    US-A- 4 191 550**
**US-A- 4 239 522**

**Beschreibung**

Die Erfindung betrifft die Herstellung klarer nährstoffreicher stickstoff- und schwefelhaltiger Flüssigdünger mit einem optimalen Verhältnis von Stickstoff zu Schwefel von 4-5:1 bei einer Rezeptur, gemäß Anspruch 1, die Ätzschäden in Pflanzenbeständen bei der Ausbringung vermeidet, Korrosionen an Behälterwänden aus Kohlenstoffstahl ausschließt und als ein Qualitätskriterium unter mitteleuropäischen Klimabedingungen einen Kristallpunkt von -15 °C oder tiefer gewährleistet. Stickstoff-Schwefel-Flüssigdünger, bestehend aus Ammoniumnitrat-Harnstoff-Lösung (AHL) oder Harnstofflösung und ausschließlich Ammoniumthiosulfat (ATS) lassen sich zwar im genannten optimalen N:S-Verhältnis herstellen, wirken aber wegen des dabei notwendigerweise hohen ATS-Anteils schwach nitrifikationsinhibierend auf die Ammonium- und Carbamid-N-Komponenten im Dünger. Nach der deutschen Düngemittelverordnung sind Stickstoffdünger mit einem Anteil von 7,7 % Dicyandiamid und 4,8 % ATS bezogen auf den Gesamtgehalt an Ammonium-, Carbamid- und Cyanamid- enthaltenem Stickstoff als N-stabilisierte Düngemittel zugelassen. ATS allein ohne Dicyandiamid wirkt erst bei wesentlich höheren Gehalten und ist deshalb auch nicht als Nitrifikationsinhibitor in der deutschen Düngemittelverordnung zugelassen.
Die Bereitstellung N-stabilisierter Flüssigdünger ist nicht in jedem Fall gewünscht. Es besteht auch verbreitet Nachfrage nach einem Stickstoff-Schwefel-Flüssigdünger ohne Nitrifikationsinhibitor. Das schließt die Herstellung von N/S-Flüssigdüngern mit alleiniger Zugabe von ATS als Schwefelquelle aus.
Stickstoff-Schwefel-Flüssigdünger, die neben anderen Nährstoffen Ammoniumnitrat und/oder Ammoniumsulfat enthalten, wirken stark korrosiv gegenüber Kohlenstoffstahl, beispielsweise in Rohrleitungen und an Behälterwandungen. Zur Vermeidung von Korrosionsschäden bei Transport, Lagerung und Ausbringung des Flüssigdüngers müssen daher Korrosionsinhibitoren zugesetzt werden. Eine Vielzahl unterschiedlich zusammengesetzter chemischer Stoffe wurde als Korrosionsinhibitoren vorgeschlagen. Waren es anfangs nur bevorzugt anorganische Salze, die mit dem Wandmaterial unter Ausbildung einer unlöslichen passivierenden Schutzschicht reagierten, wurden später auch Verbindungen mit Tensideigenschaften vorgeschlagen. Diese bilden an der Grenzfläche zwischen Flüssigkeit und Wandung eine passivierende Schutzschicht, die allerdings bei Turbulenzen in der Flüssigkeit, zum Beispiel bei raschem Durchleiten durch eine Pipeline oder ähnlichen Umschlagsoperationen, partiell gestört werden kann.
Beispiele für den Einsatz anorganischer Salze sind in DD 208143, US 4556536 und US 4600558 dargelegt. Das in DD 208143 für Ammoniumnitrat-Harnstoff-Lösung als Stickstoff-Flüssigkeitsdünger vorgeschlagene Korrosionsschutzmittel, bestehend aus einem Gemisch aus Mono- und Diphosphaten, gibt in Stickstoff-Schwefel-Flüssigdüngern bestehend aus Ammoniumnitrat, Harnstoff und Ammoniumsulfat dagegen keinen ausreichenden Schutz. Ähnlich verhalten sich andere Schutzsysteme auf Grundlage von anorganischen Salzen, wenn Ammoniumsulfat im Flüssigdünger zugegen ist. Hier bewährten sich dann solche Korrosionsschutzmittel, die als Tenside eine schützende Grenzfläche zwischen Flüssigkeit und Behälterwandung ausbilden. Dazu wurden alkylierte Phosphorsäuren oder Phosphonsäure, Alkyl- oder Aralkylcarbonsäuren sowie auch Alkylsulfonsäuren als Beispiele in einer Vielzahl von Patenten vorgeschlagen.
Nährstoffreiche Flüssigdüngemittel mit einem hohen Salzgehalt führen unter bestimmten Bedingungen bei längerer Verweilzeit auf den Blättern eines Pflanzenbestandes zu Ätzschäden mit Auswirkungen auf die weitere Vegetation und letztlich zu herabgesetzten Ernteerträgen.
Entscheidend für das Ausmaß der Schäden des Düngers auf den Blättern ist die Kontaktzeit von Flüssigdünger und Pflanze. Diese wiederum wird stark von der Oberflächenspannung der Düngerflüssigkeit bestimmt: Eine hohe Oberflächenspannung im Bereich von Wasser mit ca. 73 mN/m führt zur Ausbildung großer Flüssigkeitstropfen, die rasch von den Blättern abtropfen und dadurch nur kurzzeitigen Kontakt mit der Pflanze haben. Bei stark abgesenkter Oberfächenspannung, was bei Zusatz der tensidischen Korrosionsinhibitoren unvermeidlich ist, verteilen sich die kleinen Tröpfchen auf den Blättern durch Spreitung und laufen nicht mehr schnell genug ab, sondern können eine größere Fläche des Blattes über längere Zeit gut benetzen. Die Folge davon sind beobachtete höhere Ätzschäden durch den Flüssigdünger bei Einsatz von grenzflächenaktiven Korrosionsinhibitoren oder auch bei Zumischung tensidhaltiger Pflanzenschutzmittel-Formulierungen, wie beispielsweise Fungiziden, in Flüssigdünger.
Die Notwendigkeit der Einhaltung eines Kristallpunktes von mindestens -15 °C ergibt sich bei der Lagerung des Flüssigdüngers über den mitteleuropäischen Winter. Auskristallisierter Feststoff oder Eisbildung in Behältern oder Leitungen führt zu mannigfachen Erschwernissen.
Aus diesem Grund entspricht beispielsweise eine Rezeptur für einen N/S-Flüssigdünger aus Harnstoff-Lösung und ausschließlich Ammoniumsulfat als Schwefelquelle unter Zugrundelegung des physikochemischen Zustandsdiagrammes (The International Fertilizer Society - Proceedings No 559) nicht den Anforderungen an die Einhaltung des Kristallpunktes, da bei tiefen Temperaturen und hohen Konzentrationen das Ammoniumsulfat auskristallisiert. Im System AHL-Ammoniumsulfat-Wasser in einer Zusammensetzung von 18 % N und 6 % S liegt der Kristallpunkt nach der gleichen Quelle bei ca. -9 °C. Damit wird deutlich, dass unter Beschränkung auf die Nährstoffkomponenten Harnstoff, Ammoniumnitrat und Ammoniumsulfat kein N/S-Flüssigdünger mit einem gewünschten Nährstoffverhältnis von 4-5:1 unter Einhaltung aller Gebrauchswertvorgaben herstellbar ist.

# EP 2 462 086 B1

US4239522 A beschreibt eine UAN Zusammensetzung die Harnstoff, Ammoniumnitrat, Ammoniumsulfat und Wasser enthält. Die Zusammensetzung enthält kein Ammoniumthiosulfat.

US3930832 A beschreibt eine UAN Zusammensetzung die 0.1 bis 5 Gew% Thiosulfat in eine Ammoniumnitrat - Harnstoff Wasser-Lösung enthält.

Aufgabe der vorliegenden Erfindung ist es, eine Rezeptur für einen Flüssigdünger gemäß Anspruch 1 vorzuschlagen, bei der alle vorgenannten Anforderungen - ein hoher und im N/S-Verhältnis optimierter Nährstoffgehalt, das Ausbleiben von Ätzschäden an Pflanzen, der Korrosionsschutz und die Einhaltung der Kristallpunktvorgabe - erfüllt werden. Ammoniumsulfat als alleinige Schwefelquelle im Flüssigdüngemittel bei Gegenwart von Ammoniumnitrat erfüllt durch seine begrenzte Löslichkeit nicht die Forderung nach einem optimalen N/S-Verhältnis. Außerdem erfordert Ammoniumsulfat tensidhaltige Korrosionsschutzzusätze mit den genannten nachteiligen Wirkungen bei der Ausbringung in Pflanzenbestände.

Ein angestrebtes N/S-Nährstoffverhälnis von 4-5:1 bei einem Gesamtnährstoffgehalt von 25 - 35 %, z.B. 30 - 35 %, ist nur erreichbar durch den Zusatz einer schwefelreichen wasserlöslichen Verbindung, wie zum Beispiel Ammoniumthiosulfat, zu einer Ammoniumnitrat-Harnstofflösung (AHL) als Basis, allerdings unterhalb des Konzentrationsbereiches der Wirkung als Nitrifikationshemmer.

Aus technologischen und aus Kostengründen wird als Basisdünger eine mit Phosphat-/ Diphosphat-Korrosionsinhibitor versetzte AHL mit 28 - 30 % N-Gehalt eingesetzt, der gemäß der gewünschten Flüssigdünger-N/S-Endzusammensetzung ca. 70%ige Harnstofflösung (bei 95 °C) und der entsprechende Anteil an Ammoniumsulfat (möglicherweise aus Ammoniak und Schwefelsäure in situ erzeugt) und schließlich 60%ige ATS-Lösung zugemischt werden. Eine Feststoffdosierung der einzelnen Komponenten ist prinzipiell auch möglich, wird jedoch aus praktischen Gründen nicht favorisiert.

Überraschenderweise zeigte sich, dass die auf diese Weise hergestellten Rezepturen unter Zusatz von Ammoniumsulfat und Ammoniumthiosulfat zu Ammoniumnitrat-Harnstoff ohne die sonst bei Ammoniumsulfat-Gehalten notwendigen tensidischen Korrosionsinhibitoren auskommen, wie entsprechende Untersuchungen zeigten. Es genügt das mit der AHL eingebrachte Korrosionsinhibitorgemisch aus Natriumdihydrogenphosphat und Natriumdiphosphat $(NH_4H_2PO_4/Na_4P_2O_7)$ in Kombination mit Ammoniumthiosulfat. Die Inhibitorkonzentration kann beispielsweise 2000 bis 2500 ppm betragen. Etwas 2000 ppm genügen in der Regel. Geeignete Konzentrationen ermittelt der Fachmann ohne weiteres. Der Korrosionsinhibitor kann in den Flüssigdünger z.B. zur AHL oder im Verlaufe des weiteren Mischungsprozesses zugemischt werden.

Damit bleibt auch die Oberflächenspannung des mit dem Ammoniumthiosulfat hergestellten N/S-Flüssigdüngers in der Größenordnung des Wassers zwischen 60 bis 80 mN/m, was als wesentliche Voraussetzung für eine gute Pflanzenverträglichkeit erkannt wurde.

Offenbar zeigt das Ammoniumthiosulfat darüber hinaus eine gewisse Safener-Wirkung gegen Verätzung und erhöht die Widerstandsfähigkeit der Pflanzen gegenüber Stress-Situationen, wie sie bei hohen Salzgehalten im Kontakt mit der Blattoberfläche der Pflanzen auftreten. Die als solche Safener wirksamen Substanzen erhöhen die Salztoleranz der Pflanzen.

Weiterhin ist der Ammoniumthiosulfat-Anteil ein Schwefel-Depot im S-Nährstoffanteil, da im Boden die Umwandlung von Thiosulfat zum alleinigen pflanzenverfügbaren Sulfat-Schwefel einige Zeit benötigt, wie aus Bodenmodelltest-Versuchen bekannt ist.

Auch die Prüfung des Kristallpunktes im Lagertest ergab, dass die Vorgabe von -15 °C trotz der hohen Nährstoffgehalte eingehalten werden kann. Ammoniumthiosulfat muss zur Herbeiführung der Safenerwirkung gegenüber Verätzungen durch Flüssigdünger in einer Konzentration von mindestens 7 Gewichtsprozenten enthalten sein, wenn zugleich Ammoniumnitrat und vor allem Ammoniumsulfat enthalten sind.

Die Erfindung wird durch nachstehende Beispiele beschrieben. Die Erfindung ist durch die Beispielrezepturen nicht eingeschränkt.

Geprüfte Rezepturen der N/S-Flüssigdünger:

Unter Einsatz der Basis-Rohstoffkomponenten Ammoniumnitrat, Harnstoff, gegebenenfalls als Lösung (AHL) und Harnstofflösung, Ammoniumthiosulfat bzw. als Lösung und Ammoniumsulfat wurden Lösungen der Flüssigdünger-Rezepturen N/S 26/5, N/S 25/6 und N/S 25/5 hergestellt und untersucht.

| Basis Rohstoffe | Zusammensetzung (%) |
|---|---|
| Ammoniumnitrat | 28 - 30 |
| Harnstoff | 22 - 28 |
| Ammoniumsulfat | 8 - 9 |

(fortgesetzt)

| Basis Rohstoffe | Zusammensetzung (%) |
|---|---|
| Ammoniumthiosulfat | 7 - 10 |
| Wasser | ad 100 |

Beispiel 1:

Untersuchung der Korrosion von Flüssigdüngern im Vergleich

Die Korrosionsprüfung wurde pro Flüssigdünger-Variante als Doppelbestimmung durchgeführt. Die Prüfkörper werden bei Raumtemperatur über mindestens 28 Tage hängend in der Prüflösung in völliger Ruhe belassen. Durch Ermittlung der Gewichtsdifferenz zwischen Beginn und Beendigung kann der Abtrag pro Jahr nach folgender Formel berechnet werden.

$$A = \frac{(Ga - Ge) \cdot 365 \cdot 10}{F \cdot Dichte \cdot d}$$

A = Abtrag in Millimeter pro Jahr (mm/a)
Ga = Gewicht am Anfang in Gramm (g)
Ge = Gewicht am Ende in Gramm (g)
F = Prüfkörperfläche in Quadratzentimeter (cm$^2$)
$\rho$ = Dichte des Prüfkörpers in Gramm pro Kubikzentimeter (g/cm3)
d = Anzahl der Versuchstage

*Geräte und Reagenzien:*

- Glasflaschen mit gelochtem Schraubdeckel (1000 ml)
- Teflonfaden
- Prüfkörper Kohlenstoffstahl Dichte: 7,5 g/cm3
- Analysenwaage
- Konz. Salzsäure (zur Aktivierung der C-Stahl Prüfkörper)
- Leitungswasser

In der folgenden Tabelle ist der Abtrag pro Jahr der geprüften Kohlenstoffstahl-Prüfkörper zusammengefasst.

| N/S-Verhältnis | AHL mit Phosphatinhibitor 1) | Inhibitor aus Tensiden 2) | Abtrag mm/a | Aussehen Lösung | Aussehen Prüfkörper |
|---|---|---|---|---|---|
| 24/3 | nein | nein | 0,5154 | braun/trüb | rau/stumpf |
| 24/3 | ja | nein | 0,1778 | braun/trüb | rau/stumpf |
| 25/6 | ja | nein | 0,0054 | klar | glatt |
| 26/5 | ja | nein | 0,0064 | klar | glatt |
| 25/5 | ja | nein | 0,0070 | klar | glatt |
| 11/26 | nein | nein | 0,0029 | klar/brauner Bodensatz | glatt |
| 25/6 | nein | nein | 0,0059 | klar/brauner Bodensatz | glatt |
| 26/5 | nein | nein | 0,0064 | klar/brauner Bodensatz | glatt |

(fortgesetzt)

| N/S-Verhältnis | AHL mit Phosphatinhibitor 1) | Inhibitor aus Tensiden 2) | Abtrag mm/a | Aussehen Lösung | Aussehen Prüfkörper |
|---|---|---|---|---|---|
| 25/5 | nein | nein | 0,0070 | klar/brauner Bodesatz | glatt |
| 1) Konzentration 2000 -2500 ppm; 2) 100 - 200 ppm | | | | | |

In der Materialkunde ist als Korrosion ein Materialabtrag > 0,1000 mm/a definiert. Der Abtrag der erfindungsgemäßen Flüssigdünger-Lösungen ist < 0,0100 mm/a, so dass von keiner Korrosion ausgegangen werden kann. Die inhibierende Wirkung von Ammoniumthiosulfat (Probe N/S 11/26) ist bezüglich des Abtrages pro Jahr ausreichend, aber der aufgetretene Bodensatz ist störend, so dass die Kombination mit dem Phosphatinhibitor zu favorisieren ist.

Beispiel 2

Prüfung der Pflanzenverträglichkeit an ausgewählten Kulturen im Freiland

Die pflanzenbauliche Bewertung der Pflanzenverträglichkeit der erfindungsgemäßen Flüssigdünger mit den N/S-Nährstoffverhältnissen 25/5, 26/5 und 25/6 wurde beispielhaft mit Lösungen der optimalen Zusammensetzung 25/6 und 31 % Gesamt-Nährstoffgehalt durchgeführt.
Die Pflanzenverträglichkeit bewertet das Auftreten von Verätzungen in Form von Nekrosen an Pflanzenteilen, speziell den Blättern, nach 3, 5 und 7 Tagen nach der Applikation von Düngerlösungen.
Entsprechend dem bekannten landwirtschaftlichen Prüfsystem werden die zu prüfenden Kulturen unter Freilandbedingungen in Parzellen herangezogen und bei Erreichen praxisüblicher Düngungstermine mit entsprechender charakteristischer Pflanzenentwicklung gedüngt und bewertet. Die Menge an Dünger angegeben als Stickstoff pro Fläche kgN/ha) ist entsprechend der zu düngenden Pflanzen und Termine unterschiedlich.
Die Pflanzenverträglichkeit ist in den Kulturen Raps, Winterweizen und Wintergerste im Vergleich zu AHL 28/0 und einem schwefelhaltigen Flüssigdünger 24/3 mit geringer Oberflächenspannung aufgrund eines tensidischen Korrosionsinhibitors geprüft worden. Die Ergebnisse der Pflanzenverträglichkeitsprüfung sind den folgenden Tabellen zu entnehmen.
Pflanzenverträglichkeit in Raps

| Düngungstermin | Menge-N kg/ha | N/S 28/0 Nekrosen (%) | N/S 24/3 Nekrosen (%) | N/S 25/6 Nekrosen (%) |
|---|---|---|---|---|
| 31. März | 100 | 5 | 11 | 6 |
| 06. April | 100 | 6 | 11 | 6 |
| 09. April | 80 | 5 | 8 | 7 |
| 14. April | 80 | 4 | 6 | 5 |

Pflanzenverträglichkeit in Winterweizen

| Düngungstermin | Menge-N kg/ha | N/S 28/0 Nekrosen (%) | N/S 24/3 Nekrosen (%) | N/S 25/6 Nekrosen (%) |
|---|---|---|---|---|
| 07. April | 60 | 1 | 3 | 2 |
| 14. April | 60 | 2 | 3 | 3 |
| 24. April | 70 | 9 | 10 | 8 |
| 30. April | 70 | 6 | 7 | 5 |
| 11. Mai | 100 | 4 | 6 | 3 |
| 18. Mai | 100 | 4 | 6 | 4 |

Pflanzenverträglichkeit in Wintergerste

| Düngungstermin | Menge-N kg/ha | N/S 28/0 Nekrosen (%) | N/S 24/3 Nekrosen (%) | N/S 25/6 Nekrosen (%) |
|---|---|---|---|---|
| 07. April | 50 | 1 | 3 | 2 |
| 14. April | 50 | 1 | 2 | 2 |
| 17. April | 50 | 2 | 4 | 2 |
| 24. April | 50 | 3 | 5 | 3 |
| 27. April | 80 | 3 | 4 | 3 |
| 30. April | 80 | 2 | 3 | 1 |

Es ist gut zu erkennen, dass der erfindungsgemäße Flüssigdünger N/S 25/6 in seiner Pflanzenverträglichkeit der AHL 28 entspricht.

Beispiel 3

Die Düngerlösungen aus den Pflanzenverträglichkeitsuntersuchungen wurden bezüglich der Oberflächenspannung vermessen. Die ermittelten Werte sind der folgenden Tabelle zu entnehmen.

| N/S-Verhältnis | Oberflächenspannung (mN/m) |
|---|---|
| 28/0 | 69 |
| 25/6 | 67 |
| 24/3 | 72 |
| 24/3 (mit tensidischem Inhibitor) | 35 |

Die halbierte Oberflächenspannung durch die tensidischen Inhibitoren beim Verhältnis 24/3 erklärt die Ätzschäden aus dem Beispiel 2.

Beispiel 4

In Mitteleuropa ist der Kristallpunkt für einen Flüssigdünger eine entscheidende charakteristische Eigenschaft, die aus der mengen- und rohstoffseitig gewählten Zusammensetzung resultiert.
Zur Bestimmung vom Kristallpunkt werden unterschiedliche Methoden angewandt, die durchaus nicht immer die richtigen Ergebnisse widerspiegeln. Dies trifft insbesondere zu, wenn die Lösungen aus mehreren gelösten Komponenten und nicht nur einer gelösten Substanz bestehen.
Die hier bestimmten Kristallpunkte sind mit einer internen Methode, die speziell für die Prüfung im Düngemittelbereich erarbeitet wurde, bestimmt worden.
In einen Schüttelzylinder (100 ml) mit Schliff und Stopfen werden 70 ml der Probe gefüllt und in einem Kryostaten gekühlt, beginnend bei 0 °C über -5 °C, -10 °C, -15 °C, -17 °C bis -19 °C. Die Proben wurden bei der entsprechenden Temperatur jeweils 2 h belassen und gegebenenfalls mit einem Glasstab an der Innenwand gerieben.
In der Tabelle sind die Kristallpunkte der erfindungsgemäßen Flüssigdünger denen anderer Flüssigdünger gegenübergestellt.

| N/S-Verhältnis | Rohstoffe | Kristallpunkt (°C) |
|---|---|---|
| 28/0 | Harnstoff; Ammoniumnitrat | -17 |
| 26/5 | Harnstoff; Ammoniumnitrat; Ammoniusulfat; Ammoniumthiosulfat | -15 |
| 25/6 | Harnstoff; Ammoniumnitrat; Ammoniumsulfat; Ammoniumthiosulfat | -15 |
| 25/5 | Harnstoff; Ammoniumnitrat; Ammoniumsulfat; Ammoniumthiosulfat | -15 |
| 24/3 | Harnstoff; Ammoniumnitrat; Ammoniumsulfat | -15 |
| 20/6 | Harnstoff; Ammoniumsulfat | -5 |

**Patentansprüche**

1. Nährstoffreicher Stickstoff-Schwefel-Flüssigdünger mit einem Gesamtnährstoffgehalt von über 25% und einem Stickstoff-Schwefel-Verhältnis von 4-5 : 1, enthaltend 28-30% Ammoniumnitrat, 22-28% Harnstoff, 8-9% Ammoniumsulfat, 7-10% Ammoniumthiosulfat und mindestens ein Phosphatsalz in einer stahlkorrosionsinhibierenden Konzentration, wobei das mindestens eine Phosphatsalz in einer Konzentration von 2.000 bis 2500 ppm enthalten ist.

2. Stickstoff-Schwefel-Flüssigdünger nach Anspruch 1, wobei das mindestens eine Phosphatsalz ein Gemisch aus Mono- und Diphosphaten ist.

3. Stickstoff-Schwefel-Flüssigdünger nach Anspruch 2, wobei das Gewichtsverhältnis Monophosphat zu Diphosphat 2 : 1 beträgt.

4. Stickstoff-Schwefel-Flüssigdünger nach einem der vorstehenden Ansprüche, der außerdem mindestens einen Ureaseinhibitor oder mindestens einen Nitrifikationsinhibitor oder ein Gemisch aus mindestens einem Urease- und mindestens einem Nitrifikationsinhibitor in einer urease- bzw. nitrifikationsinhibierenden Konzentration enthält.

**Claims**

1. Nutrient-rich nitrogen-sulfur liquid fertilizer with a total nutrient content of more than 25% and a nitrogen-sulfur ratio of 4-5 : 1, containing 28-30% ammonium nitrate, 22-28% urea, 8-9% ammonium sulfate, 7-10% ammonium thiosulfate and at least one phosphate salt in a steel corrosion inhibiting concentration, wherein the at least one phosphate salt is contained in a concentration of 2,000 to 2,500 ppm.

2. Nitrogen-sulfur liquid fertilizer according to claim 1, wherein the at least one phosphate salt is a mixture of mono- and diphosphates.

3. Nitrogen-sulfur liquid fertilizer according to claim 2, wherein the weight ratio of monophosphate to diphosphate is 2 : 1.

4. Nitrogen-sulfur liquid fertilizer according to any one of the preceding claims, which further comprises at least one urease inhibitor or at least one nitrification inhibitor or a mixture of at least one urease and at least one nitrification inhibitor in a urease or nitrification inhibiting concentration.

**Revendications**

1. Engrais liquide azote-soufre riche en nutriments ayant une teneur totale en nutriments supérieure à 25 % et un rapport azote-soufre de 4 à 5:1, contenant 28 à 30 % de nitrate d'ammonium, 22 à 28 % d'urée, 8 à 9 % de sulfate d'ammonium, 7 à 10 % de thiosulfate d'ammonium et au moins un sel de phosphate en une concentration inhibant la corrosion de l'acier, ledit au moins un sel de phosphate étant contenu en une concentration de 2 000 à 2 500 ppm.

2. Engrais liquide azote-soufre selon la revendication 1, dans lequel ledit au moins un sel de phosphate est un mélange de mono- et diphosphates.

3. Engrais liquide azote-soufre selon la revendication 2, dans lequel le rapport en poids entre le monophosphate et le diphosphate est de 2:1.

4. Engrais liquide azote-soufre selon l'une quelconque des revendications précédentes, qui contient en outre au moins un inhibiteur d'uréase ou au moins un inhibiteur de nitrification ou un mélange d'au moins un inhibiteur d'uréase et d'au moins un inhibiteur de nitrification en une concentration inhibant l'uréase ou la nitrification.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 208143
- US 4556536 A
- US 4600558 A
- US 4239522 A
- US 3930832 A